# EUROPÄISCHE PATENTSCHRIFT

(11) **EP 3 299 093 B1**
(45) Veröffentlichungstag und Bekanntmachung des Hinweises auf die Patenterteilung: **15.04.2020**
(21) Anmeldenummer: 16190651.6
(22) Anmeldetag: 26.09.2016
(51) Int. Cl.: B21D 28/02, B21D 28/10, B21D 28/26, B21D 39/03, B21D 43/02, B23P 11/00

(54) **VERFAHREN ZUR HERSTELLUNG VON WERKSTÜCKEN**
METHOD FOR MANUFACTURING WORKPIECES
PROCÉDÉ DE FABRICATION DE PIÈCES

(43) Veröffentlichungstag der Anmeldung: 28.03.2018
(73) Patentinhaber: TRUMPF Werkzeugmaschinen GmbH + Co. KG, 71254 Ditzingen (DE)
(72) Erfinder: WILHELM, Markus, 70839 Gerlingen (DE); KLINKHAMMER, Marc, 71254 Ditzingen (DE)
(74) Vertreter: Mammel und Maser

(56) Entgegenhaltungen:
- DE-A1- 19 524 235
- DE-A1-102013 221 279
- JP-A- 2001 334 329
- KR-A- 20040 017 462

## Beschreibung

Die Erfindung betrifft ein Verfahren zur Herstellung von Werkstücken aus mehreren gleichen oder voneinander abweichenden plattenförmigen Materialien, insbesondere von verstärkten Werkstücken.

Aus der JP 2001 334329 A auf welcher der Oberbegriff des Patentanspruchs 1 basiert ist ein Verfahren zum Herstellen von Werkstücken aus mehreren plattenförmigen Materialien bekannt. In einem Arbeitsbereich einer Bearbeitungsstation werden ein erstes und zweites plattenförmiges Material positioniert. Jedes plattenförmige Material wird bearbeitet. Darauffolgend werden das erste und zweite plattenförmige Material oder ein daraus hergestelltes Werkstückteil verbunden.

Aus der DE 10 2013 221 279 A1 ist des Weiteren ein Verfahren zum Herstellen eines Blechverbundbauteils bekannt, welches in einem ersten Arbeitsschritt mehrere Blechformteile durch Umformen von zugeführtem Blechmaterial erzeugt und in einem zweiten Schritt die erzeugten Blechformteile zusammenführt, um diese darauffolgend zu fügen.

Aus der DE 195 24 235 A1 ist ein Verfahren zur Herstellung eines Formteils mit unterschiedlichen Materialstärken bekannt. Dabei wird zunächst eine Basisplatine auf ein Zwischen- oder Fertigmaß zugeschnitten. Darauffolgend wird ein Verstärkungselement geschnitten und auf der Basisplatine mittels einer Fügetechnik, wie beispielsweise Kleben, Schweißen oder Löten als auch Clinchen, verbunden. Darauffolgend werden weitere Stanz- und Umformschritte an der Basisplatine durchgeführt, um das Formteil herzustellen.

Der Erfindung liegt die Aufgabe zugrunde, ein Verfahren zur Herstellung von Werkstücken vorzuschlagen, bei welchem gleiche oder voneinander abweichende plattenförmige Materialien zur Herstellung von verstärkten Werkstücken automatisiert und prozesssicher hergestellt werden.

Diese Aufgabe wird durch ein Verfahren zum Herstellen von Werkstücken gelöst, bei welchem in einem Arbeitsbereich einer Bearbeitungsstation in einer Werkstückbearbeitungsmaschine ein erstes plattenförmiges Material positioniert und mit einer Greifvorrichtung entlang einer Werkstückauflage in dem Arbeitsbereich der Bearbeitungsstation verfahrbar gehalten wird und bei dem in dem Arbeitsbereich der Bearbeitungsstation zumindest ein zweites plattenförmiges Material positioniert und mit einer weiteren Greifvorrichtung der Bearbeitungsstation entlang der Werkstückauflage in den Arbeitsraum verfahrbar gehalten wird und bei dem aus dem ersten plattenförmigen Material zumindest ein erstes Werkstückteil hergestellt wird und das zumindest eine erste Werkstückteil dem zweiten in dem Arbeitsbereich angeordneten plattenförmigen Material zugeführt und mit diesem plattenförmigen Material oder mit einem zweiten Werkstückteil, welches aus dem zweiten plattenförmigen Material hergestellt wird und zumindest teilweise bearbeitet ist, verbunden wird und bei dem das zweite Werkstückteil, welches mit dem zumindest einen ersten Werkstückteil verbunden ist, in der Bearbeitungsstation fertiggestellt wird. Dieses Verfahren ermöglicht zum Beispiel, dass das erste und zweite plattenförmige Material in der Materialdicke und/oder der Materialauswahl voneinander abweichend gewählt werden können, jedoch beide gleichzeitig in demselben Arbeitsraum der Bearbeitungsstation positioniert und mit den Greifervorrichtungen gehalten werden. Dadurch wird beispielsweise aus einem der beiden plattenförmigen Materialien zumindest ein erstes Werkstückteil hergestellt und auf dem anderen plattenförmigen Material positioniert, aus welchem das zweite Werkstückteil hergestellt wird und mit diesem verbunden, um darauffolgend ein verstärktes Werkstück herzustellen. Durch die Handhabung der Werkstückteile von dem zumindest einen plattenförmigen Material zum Positionieren auf dem benachbarten plattenförmigen Material ist eine Zwischenlagerung nicht erforderlich. Vielmehr kann ein schnelles aufeinanderfolgendes Abarbeiten ermöglicht sein. Dadurch kann eine Reduzierung der Taktzeit erzielt werden.

Bei dem erfindungsgemäßen Verfahren können auch mehrere plattenförmige Materialien in dem Arbeitsbereich angeordnet sein, so dass nicht nur aus zwei verschiedenen Lagen und/oder Schichten bestehende Werkstücke, sondern auch darüber hinaus mehrschichtige Werkstücke oder Sandwichkonstruktionen hergestellt werden können. Denkbar ist auch die Herstellung eines Werkstückes aus mindestens zwei Werkstückteilen mit Aussparungen oder Nuten zur Ausbildung von Kanälen oder Hohlräumen. Mit dem erfindungsgemäßen Verfahren ist der Aufbau von Leiterbahnen auf einem isolierenden Grundwerkstoff möglich. Bei der Verwendung von plattenförmigen Materialien mit verschiedenen Eigenschaften kann zum Beispiel auf einem weichen Grundmaterial mindestens eine Lage und /oder Schicht aus verschleißfesten Material angeordnet werden.

Das Verfahren sieht des Weiteren vor, dass mit einem letzten Bearbeitungsschritt im Bearbeitungsbereich der Bearbeitungsstationen das erste und/oder zweite Werkstückteil von dem zweiten plattenförmigen Material oder einem entstehenden Restgitter freigeschnitten wird. Somit kann zumindest eines der beiden Werkstückteile bis zu einem letzten Prozessschritt oder Arbeitsschritt an dem zweiten plattenförmigen Material oder einem daraus gebildeten Restgitter verbleiben und innerhalb der Werkstückauflage verfahren werden, bis alle erforderlichen Arbeitsschritte durchgeführt sind. Erst anschließend erfolgt ein Freischneiden und Abtransportieren des verstärkten Werkstücks aus der Werkstückauflage.

Eine bevorzugte Ausgestaltung des Verfahrens sieht vor, dass das zweite Werkstückteil vor dem Positionieren des zumindest einen ersten Werkstückteils darauf teilweise fertiggestellt oder bis auf zumindest einen Verbindungssteg zum Restgitter des zweiten plattenförmigen Materials oder zum plattenförmigen Material fertiggestellt wird. Dadurch kann wiederum eine Prozessoptimierung ermöglicht sein. Insbesondere können dann auch an dem zweiten Werkstückteil Ausstanzungen, Ausprägungen, Vertiefungen oder Verformungen eingebracht werden, die nach dem Positionieren des zumindest einen ersten Werkstückteils zum zweiten Werkstückteil nicht mehr eingebracht werden können.

Eine weitere bevorzugte Ausgestaltung des Verfahrens sieht vor, dass das zumindest eine erste Werkstückteil mit einem Werkzeug aus der Ebene der Werkstückauflage herausgehoben und auf das zweite plattenförmige Material, insbesondere das zumindest zweite teilweise bearbeitete Werkstückteil im zweiten plattenförmigen Material überlappend positioniert wird. Dadurch können die Verfahr- oder Hubachsen in der Bearbeitungsstation für die Verfahrbewegung des zumindest einen ersten Werkstückteils zum zweiten plattenförmigen Material eingesetzt werden, so dass eine einfache Ansteuerung des Werkzeuges in der Bearbeitungsstation möglich ist.

Des Weiteren wird die Handhabung des zumindest einen Werkstückteils zum Positionieren zum zweiten plattenförmigen Material mit einem Stanz-Handling-Werkzeug durchgeführt. Ein solches Stanz-Handling-Werkzeug ermöglicht, dass ein Freischneiden des ersten Werkstückteils aus dem Restgitter des ersten plattenförmigen Materials gleichzeitig mit einem Spannen oder Verkeilen mit dem Trennwerkzeug, insbesondere mit dem Stanzstempel, erfolgt, so dass kein Werkzeugwechsel erforderlich ist, sondern dieses Stanz-Handling-Werkzeug zum Freischneiden gleichzeitig auch für die Handhabung eingesetzt werden kann, um das erste Werkstückteil auf dem zweiten Werkstückteil zu positionieren. Alternativ kann nach dem Freischneiden des ersten Werkstückteils aus dem Restgitter des ersten plattenförmigen Materials mittels einer Handhabungseinrichtung, wie beispielsweise einer Sauggreifvorrichtung, auf das zweite Werkstückteil umgesetzt werden. Zur weiteren Reduzierung der Prozesszeiten können mittels der Sauggreifvorrichtung mehrere erste Werkstückteile gleichzeitig gegriffen und auf dem zweiten plattenförmigen Material positioniert werden.

Des Weiteren wird bevorzugt an dem zumindest einen ersten Werkstückteil für die Handhabung eine Haltelasche oder ein Halterahmen ausgebildet, die oder der nach dem Verbinden des ersten Werkstückteils mit dem zweiten plattenförmigen Material abgetrennt wird. Diese zusätzlichen Haltelaschen oder der Halterahmen werden insbesondere bei kleinen oder schwierig zu handhabenden Bauteilen gewählt, deren Fläche beispielsweise für ein Sauggreifelement der Sauggreifvorrichtung nicht geeignet ist.

Eine weitere bevorzugte Ausgestaltung des Verfahrens sieht vor, dass vor dem Positionieren des ersten Werkstückteils zum zweiten, zumindest teilweise bearbeiteten Werkstückteile oder zweiten plattenförmigen Material in das zumindest eine erste und/oder das zweite Werkstückteil zumindest eine Positionierhilfe eingebracht wird. Dadurch kann beim Positionieren des ersten Werkstückteils zum zweiten Werkstückteil eine Selbstausrichtung und Zentrierung ermöglicht sein. Eine solche Positionierhilfe kann beispielsweise durch ein Loch und eine Zentrierwarze oder Zentriernippel erfolgen. Ebenso kann eine Ausprägung und eine komplementäre Vertiefung gebildet werden.

Das zumindest eine erste Werkstückteil oder das zweite zumindest teilweise bearbeitete Werkstückteil können durch Fügen, insbesondere durch zusatzwerkstofffreies Durchsetzfügen oder durch Kleben, Löten, Schweißen oder durch eine mechanische Arretierung miteinander verbunden werden. Die Auswahl der Verbindung ist abhängig von den gewählten Materialien und/oder Dicken beziehungsweise Dickenverhältnisse von dem zumindest einen ersten Werkstückteil und zweiten Werkstückteil.

Eine weitere vorteilhafte Ausgestaltung des Verfahrens sieht vor, dass in dem ersten plattenförmigen Material mehrere erste Werkstückteile zumindest teilweise fertiggestellt werden und dass in dem zweiten plattenförmigen Material eine Anzahl von zweiten Werkstückteilen zumindest teilweise bearbeitet wird, die der Anzahl der ersten Werkstückteile im ersten plattenförmigen Material entspricht, und dass die ersten und zweiten Werkstückteile durch Verbindungsstege im jeweiligen Restgitter oder im plattenförmigen Material gehalten und das erste und zweite plattenförmige Material mit den ersten und zweiten Werkstückteilen gleichzeitig zueinander positioniert werden. Insbesondere bei der Herstellung einer großen Anzahl von gleichen verstärkten Werkstücken kann dadurch eine weitere Reduzierung der Prozesszeiten erzielt werden, da das erste Werkstückteil nicht einzeln zum zweiten Werkstückteil positioniert wird, sondern eine Vielzahl der ersten Werkstückteile durch das gesamte plattenförmige Material gleichzeitig zu den zweiten Werkstückteilen positioniert wird.

Gemäß einer ersten Ausführungsform der vorbeschriebenen Verfahrensweise kann das erste plattenförmige Material angehoben und überlappend zum zweiten plattenförmigen Material positioniert werden. Alternativ kann das erste plattenförmige Material durch Umklappen zum zweiten plattenförmigen Material positioniert werden. Je nachdem, welcher der beiden Positionierschritte ausgewählt wird, ist entsprechend die Geometrie der Werkstücke in dem plattenförmigen Material auszurichten.

Des Weiteren wird bevorzugt das erste und zumindest ein zweites plattenförmiges Material mit zumindest einem Stanzwerkzeug und/oder Biegewerkzeug und/oder durch Laserschneiden in der Bearbeitungsstation bearbeitet. Die Werkstückbearbeitungsmaschinen sind bevorzugt als sogenannte Stanz- und Kombimaschinen ausgebildet, die sowohl eine Stanzbearbeitung als auch ein Laserschneiden ermöglichen. Gegebenenfalls können auch einzelne Biegeprozesse durchgeführt werden.

Eine weitere bevorzugte Ausgestaltung des Verfahrens sieht vor, dass das verstärkte Werkstück zweiteilig ist und aus einem plattenförmigen Material und einer Verbindungskomponente hergestellt wird. Beispielsweise kann die Verbindungskomponente einen Gewindeeinsatz oder eine Gewindehülse oder ein sonstiges Verbindungselement darstellen, um eine sichere Anbindung eines Blechbauteils an einem weiteren Bauteil zu ermöglichen.

Es ist auch eine bevorzugte Ausgestaltung denkbar, dass das verstärkte Werkstück aus mindestens zwei plattenförmigen Materialien mit gleicher und/oder unterschiedlicher Dicke, Material sowie Abmessung mit dem Verfahren hergestellt wird und in dem damit verstärken Bereich des Werkstückes Ausnehmungen, wie Bohrungen, Langlöcher sowie Gewinde oder Durchzüge eingebracht werden.

Des Weiteren kann durch das Verfahren ein verstärktes Werkstück als eine Baugruppe aus mehreren, insbesondere verschiedenen Materialien hergestellt werden. Beispielsweise kann ein Fassadenbauteil hergestellt werden, welches einerseits eine hochwertige Oberfläche umfasst, das andererseits mit einem minderwertigen Trägerbauteil verbunden ist.

Des Weiteren kann durch das Verfahren ein Werkstück mit einem Mehrschichtaufbau gebildet werden. Beispielsweise können strukturierte Sandwichplatten hergestellt werden, welche Versteifungsrippen oder Versteifungskonturen aufweisen, wobei der Einsatz der Materialien an die Erfordernisse, wie beispielsweise die Optik, die Festigkeit, die Witterungsbeständigkeit oder dergleichen, angepasst sein kann.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht einer Werkstückbearbeitungsmaschine,
Figur 2 eine schematische Ansicht auf einen Arbeitsbereich einer Bearbeitungsstation der Werkstückbearbeitungsmaschine gemäß Figur 2 mit zwei plattenförmigen Materialien,
Figur 3 eine schematische Ansicht auf zwei plattenförmige Materialien in einem weiteren Bearbeitungsschritt zu Figur 2,
Figur 4 eine schematisch vergrößerte Ansicht eines ersten Werkstückteils,
Figur 5 eine schematische Ansicht von oben auf ein zweites teilweise bearbeitetes Werkstückteil,
Figur 6 eine schematische Ansicht von oben auf einen Bearbeitungsschritt zur Herstellung eines verstärkten Bauteils aus dem ersten und zweiten Werkstückteil,
Figur 7 eine schematische Ansicht von oben auf einen weiteren Bearbeitungsschritt zur Herstellung des verstärkten Werkstücks,
Figur 8 eine schematische Ansicht von oben nach einem letzten Bearbeitungsschritt zur Herstellung des verstärkten Werkstücks,
Figur 9 eine schematische Seitenansicht eines ersten und zweiten bearbeitenden Werkstückteils vor der Bildung einer alternativen Ausführungsform eines verstärkten Werkstücks,
Figur 10 eine schematische Seitenansicht einer ersten Ausführungsform des verstärkten Werkstücks gemäß Figur 9,
Figur 11 eine schematische Seitenansicht einer alternativen Ausführungsform eines verstärkten Werkstücks zu Figur 10,
Figur 12 eine perspektivische Ansicht auf ein erstes und zweites Werkstückteil vor der Herstellung einer weiteren alternativen Ausführungsform des verstärkten Werkstücks,
Figur 13 eine schematische Schnittansicht des alternativen verstärkten Werkstücks aus den Werkstücken in Figur 12, und
Figur 14 eine perspektivische Ansicht auf ein Werkstück mit einer Haltelasche.

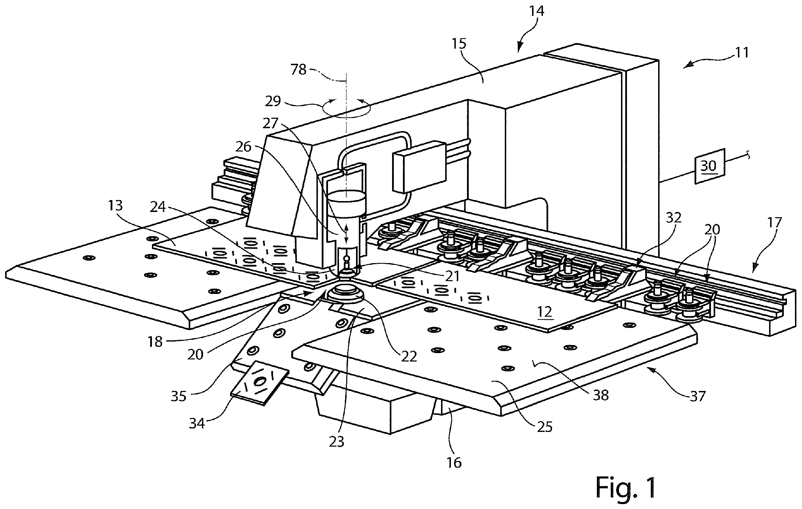

In Figur 1 ist perspektivisch eine Werkstückbearbeitungsmaschine 11 zum Bearbeiten von plattenförmigen Materialien 12, 13, wie beispielsweise Blechen, dargestellt. Die Bearbeitung von solchen plattenförmigen Materialien 12, 13 kann dabei Stanzen, Biegen, Signieren, Prägen, Gravieren, Entgraten, Rollumformen, insbesondere Rollkneifen, Gewindeformen als auch ein Folientrennen einer Folie auf der Oberfläche des plattenförmigen Materials umfassen. Des Weiteren kann eine solche Werkstückbearbeitungsmaschine 11 ergänzend eine Schneidbearbeitung mittels eines Lasers ermöglichen. Die Werkstückbearbeitungsmaschine 11 besitzt ein C-förmiges Grundgestell 14 mit einem oberen Gestellschenkel 15 und einem unteren Gestellschenkel 16. In einem Rachenraum zwischen dem oberen Gestellschenkel 15 und dem unteren Gestellschenkel 16 ist eine herkömmliche Koordinatenführung 17 untergebracht. Diese dient zum Positionieren beziehungsweise Bewegen der plattenförmigen Werkstücke 12, 13 gegenüber einer Bearbeitungsstation 18 der Werkstückbearbeitungsmaschine 11 sowie zur Magazinierung und zum Ein- und Auswechseln von Werkzeugen 20 an der Bearbeitungsstation 18.

An der Bearbeitungsstation 18 ist ein Werkzeug 20 eingewechselt, welches ein Oberwerkzeug 21 und ein Unterwerkzeug 22 umfasst. Das Unterwerkzeug 22 ist in einer Unterwerkzeugaufnahme 23 am Maschinentisch 25 angeordnet, der einerseits auf dem unteren Gestellschenkel 16 des Maschinengestells 14 ruht. Das Oberwerkzeug 21 ist an einer Oberwerkzeugaufnahme 24 eines Stößels 26 gelagert. Dieser ist an dem oberen Gestellschenkel 15 des Gestells 14 in Richtung eines Doppelpfeils 27 beispielsweise hydraulisch auf und ab bewegbar. Um eine Hubachse 28 des Stößels 26 sind sowohl das Oberwerkzeug 21 als auch das Unterwerkzeug 22 in Richtung eines Doppelpfeils 29 einstellbar beziehungsweise zustellbar. Entsprechende Zustellbewegungen werden ebenso wie die übrigen wesentlichen Maschinenfunktionen mittels einer schematisch dargestellten Steuerung 30 der Werkstückbearbeitungsmaschine 11 gesteuert. In einem Arbeitsbereich 37 der Bearbeitungsstation 18, welcher durch zumindest eine Werkstückauflage 38 des Maschinentisches 25 gebildet ist, ist zumindest ein erstes plattenförmiges Material 12 durch eine Greifvorrichtung 32 während der Bearbeitung mit dem Werkzeug 20 gehalten und relativ in der Bearbeitungsstation 18 verfahrbar geführt. Des Weiteren ist in dem Arbeitsbereich 37 zumindest ein weiteres beziehungsweise zweites plattenförmiges Material 13 durch eine weitere Greifvorrichtung 39 gehalten, wobei diese Greifvorrichtung 39 vorteilhafterweise der Greifvorrichtung 32 entspricht. Diese beiden Greifvorrichtungen 32, 39 sind vorzugsweise unabhängig voneinander zum Verfahren des ersten plattenförmigen Materials 12 und zweiten plattenförmigen Materials 13 auf der Werkstückauflage 38 ansteuerbar. Alternativ können noch weitere plattenförmige Materialien durch weitere Greifvorrichtungen in dem Arbeitsbereich 37 angeordnet und aufgenommen sein.

Das erste plattenförmige Material 12 weicht vorteilhafterweise von dem zweiten plattenförmigen Material 13 ab. Dies kann in der Materialdicke, in der Materialwahl und/oder in der Oberfläche des plattenförmigen Materials liegen. Nach dem Fertigstellen eines verstärkten Werkstücks 34 aus dem ersten und zumindest einen weiteren, insbesondere zweiten plattenförmigen Material, deren Ausführungsformen nachfolgend noch näher beschrieben werden, wird dieses verstärkte Werkstück 34 beispielsweise durch Absenken eines Tischsegmentes 35 des Maschinentisches 25 aus der Bearbeitungsstation 18 herausgeführt.

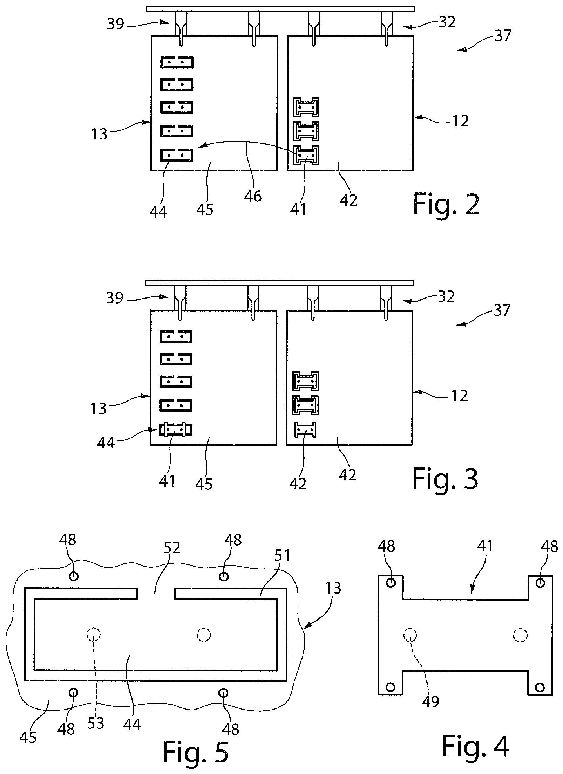

In den Figuren 2 bis 8 sind aufeinanderfolgende Arbeitsschritte dargestellt, um das verstärkte Werkstück 34 mit einer Werkstückbearbeitungsmaschine 11 gemäß Figur 1 herzustellen. Bei diesem nachfolgend beschriebenen Ausführungsbeispiel des verstärkten Werkstücks 34 handelt es sich beispielsweise um ein aufgedicktes oder verstärktes Blechteil, bei welchem in einem Bereich zur Versteifung und/oder höherer Kraftaufnahme eine Verstärkungsschicht vorgesehen ist.

Die Figur 2 zeigt eine schematische Ansicht von oben auf den Arbeitsbereich 37 der Bearbeitungsstation 18, wobei mit einer Greifvorrichtung 32 ein erstes plattenförmiges Material 12 und mit der weiteren Greifvorrichtung 39 das zweite plattenförmige Material 13 aufgenommen wird. Dieses zweite plattenförmige Material 13 kann gleich zum ersten plattenförmigen Material 12 sein, vorzugsweise ist dieses verschieden. In einem ersten Arbeitsschritt erfolgt die gemeinsame beziehungsweise individuelle Bearbeitung des ersten und zweiten plattenförmigen Materials 12, 13. In dem ersten plattenförmigen Material 12 werden erste Werkstückteile 41 hergestellt, die entweder vollständig getrennt zum Restgitter 42 angeordnet oder mit zumindest einem nicht näher dargestellten Verbindungssteg zum Restgitter 42 fixiert gehalten sind. In dem zweiten plattenförmigen Material 13 erfolgt ebenfalls eine Bearbeitung für ein zweites bearbeitetes Werkstückteil 44. Diese Bearbeitung kann nur teilweise oder auch vollständig erfolgen, so dass dieses zweite Werkstückteil 44 lediglich über mindestens einen Verbindungssteg mit dem sich dann ergebenden Restgitter 45 verbunden bleibt.

In Figur 2 ist dargestellt, dass mehrere gleiche erste Werkstückteile 41 und mehrere gleiche zweite Werkstückteile 44 ausgebildet sind. Dies wird beispielsweise bei einer Kleinteilserienherstellung durchgeführt. Es können aber auch jeweils individualisierte erste und zweite Werkstückteile 41, 44 hergestellt werden.

Das bearbeitete Werkstückteil 41 wird vom Restgitter 42 abgetrennt, sofern noch ein Verbindungssteg besteht. Anschließend wird das Werkstückteil 41 aus der Werkstückauflage abgehoben und gemäß Pfeil 46 in Figur 2 zum zweiten Werkstückteil 44 positioniert. Dies ist in Figur 3 dargestellt. Zur Handhabung des ersten Werkstückteils 41 kann eine nicht näher dargestellte Sauggreifvorrichtung, insbesondere ein Sauggreifer beziehungsweise ein Vakuumgreifer, vorgesehen sein. Alternativ kann auch ein Stanz-Handling-Werkzeug vorgesehen sein, welches zum einen den Verbindungssteg zwischen dem ersten Werkstückteil 41 und dem Restgitter 42 trennt und gleichzeitig in eine das erste Werkstückteil 41 eingebrachte Stanzkontur eingreift und sich mit diesen verklemmt oder gespannt gehalten wird, um dann die Verfahrbewegung zum zweiten Werkstückteil 44 durchzuführen. Auch kann das erste Werkstückteil 41 in einer Vertiefung an einem Oberteil oder Unterteil des Stanz-Handling-Werkzeugs für die Verfahrbewegung eingespannt gehalten werden. Es ist auch denkbar, das zweite Werkstückteil 44 unter das ausgehobene erste Werkstückteil 41 zu positionieren.

In Figur 4 ist beispielhaft vergrößert eine Draufsicht des ersten Werkstückteils 41 dargestellt. Dieses erste Werkstückteil 41 weist eine Positionierhilfe 48 auf. Diese können beispielsweise Fanglöcher sein, die in einem Stanzschritt eingebracht werden. Des Weiteren können in dem ersten Werkstückteil 41 beispielsweise Ausprägungen 49 in Form von Erhöhungen oder Vertiefungen eingebracht sein, durch welche in Analogie zu den Positionierhilfen 48 mit dem weiteren Werkstückteil 44 ein Formschluss erzielt werden kann.

Die Figur 5 zeigt eine schematische Ansicht auf das zweite Werkstückteil 44, welches durch einen Trennschnitt 51 zum plattenförmigen Material 13 bis auf einen Verbindungssteg 52 getrennt ist. Benachbart zum zweiten Werkstückteil 44 sind Positionierhilfen 48 eingebracht, die auf die Positionierhilfen 48 des ersten Werkstückteils 41 abgestimmt sind. In diesem Fall sind die Positionierhilfen 48 am zweiten plattenförmigen Material 13 als Fangwarze oder Erhöhung ausgebildet, um in die Fanglöcher im ersten Werkstückteil 41 einzugreifen. Ergänzend oder alternativ können Ausstanzungen 53 vorgesehen sein, in welche die Ausprägung 49 des ersten Werkstückteils 41 ebenfalls zur Bildung eines Formschluss eingreifen können.

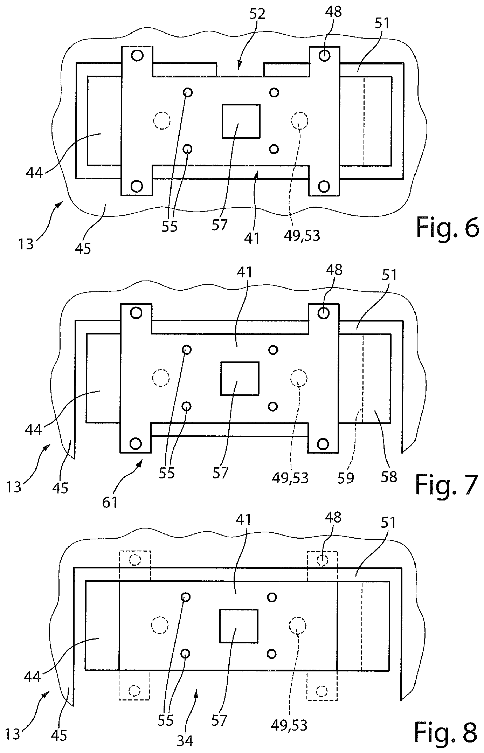

In Figur 6 ist das erste Werkstückteil 41 überlappend zum zweiten Werkstückteil 44 positioniert. Durch die Positionierhilfe 48 und/oder die Ausprägung 49 und Ausstanzung 53 kann ein Formschluss erzielt werden, um die beiden Teile in der Ausrichtung zueinander zu positionieren. Beispielsweise wird durch die Positionierhilfen 48 außerhalb des verstärkten Bauteils 34 ein Formschluss gebildet, das heißt, der Formschluss wird zwischen dem Restgitter 45 und dem ersten Werkstückteil 41 gebildet.

Hinsichtlich den Ausprägungen 49 und Ausstanzungen 53 kann alternativ der Formschluss zwischen dem ersten und zweiten Werkstückteil 41, 44 gebildet sein.

Zum Verbinden des ersten Werkstückteils 41 und des zweiten Werkstückteils 44 können ein oder mehrere Verbindungspunkte 55 vorgesehen sein. Es kann eine reib-, stoff- und/oder formschlüssige Verbindung hergestellt werden. Es können Schweißpunkte oder Vorprägungen oder dergleichen vorgesehen sein. Dadurch wird das erste Werkstückteil 41 fest mit dem zweiten Werkstückteil 44 verbunden. Ein solcher Teileverbund kann nachfolgend verschiedentlich bearbeitet werden. Eine solche nachgelagerte Bearbeitung wird nachfolgend anhand Figur 7 näher beschrieben.

Beispielsweise kann es zu einer Durchtrennung im Bereich des Formschlusses zwischen der Ausprägung 49 und der Ausstanzung 53 kommen. Beispielsweise kann eine weitere Ausnehmung 57 eingebracht werden, welche sowohl in dem ersten als auch in dem zweiten Werkstückteil 41, 44 eingebracht ist. Des Weiteren kann beispielsweise ein Endabschnitt 58 entlang der Biegelinie 59 abgekantet werden, beispielsweise um 90°. Auch kann eine Verformung und Biegung des ersten und zweiten Werkstückteils 41, 44 gleichermaßen im Überlappungsbereich erfolgen.

Nach dem Beendigen einer nachgelagerten Bearbeitung des ersten und zweiten Werkstückteils 41, 44 oder des Teileverbunds kann ein Heraustrennen des Teileverbunds erfolgen. In einem ersten Schritt kann der Verbindungssteg 52 abgetrennt werden. Des Weiteren kann ein Bereich 61 des Restgitters 45 abgetrennt werden. Darauffolgend verbleibt der Teileverbund über die Positionierhilfen 48 formschlüssig zum Restgitter 45 gehalten. Dieser Teileverbund kann entweder mittels einer Greifvorrichtung entnommen werden. Dieser Teileverbund kann auch durch eine weitere Stanzbearbeitung endbearbeitet werden, wie dies beispielsweise in Figur 8 dargestellt ist. In dieser Stanzbearbeitung werden die Positionierhilfen 48 für den Formschluss abgetrennt, da diese beispielsweise nicht mehr benötigt werden. Dadurch wird das bearbeitete Werkstück 34 vollständig frei zum Restgitter 45. Anstelle eines teilweisen Freischneidens eines Bereichs 61 des Restgitters 45 gemäß Figur 7 kann das verstärkte Bauteil 34 auch umgehend durch Abtrennen der Laschenbereiche mit den Positionierhilfen 48 fertiggestellt werden.

Durch das vorbeschriebene Verfahren wird beispielsweise ein verstärktes Werkstück 34 hergestellt, welches im mittleren Bereich versteift ausgebildet ist und im Eckbereich beispielsweise eine nicht belastbare Abdeckung oder Umkantung aufweist.

Eine alternative Ausführungsform des vorbeschriebenen Verfahrens sieht vor, dass anstelle einer Einzelhandhabung zum Positionieren des ersten Werkstückteils 41 zum zweiten Werkstückteil 44 auch vorgesehen sein kann, dass eine gleiche Anzahl von ersten Werkstückteilen 41 in das plattenförmige Material 12 und eine gleiche Anzahl von zweiten Werkstückteilen 44 in das zweite plattenförmige Material 13 eingebracht wird, um darauffolgend durch Umklappen des ersten plattenförmigen Materials 12 auf das zweite plattenförmige Material 13 gleichzeitig alle ersten Werkstückteile 41 zu den zweiten Werkstückteilen 44 zu positionieren. Alternativ zum Umklappen kann das erste plattenförmige Material 12 auch angehoben und oberhalb dem zweiten plattenförmigen Material 13 positioniert und abgesenkt werden. In beiden Fällen können Positionierhilfen 48 zur Ausrichtung der beiden plattenförmigen Materialien 12, 13 vorgesehen sein. Darauffolgend können die weiteren zu den Figuren 6 bis 8 beschriebenen Arbeitsschritte erfolgen.

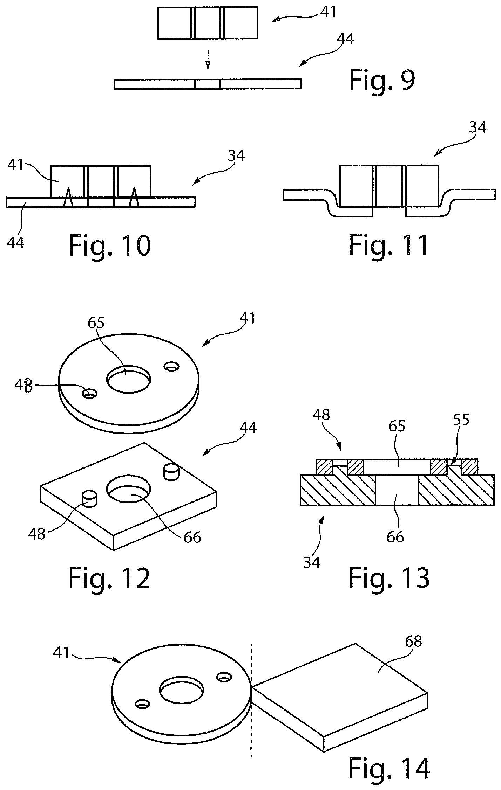

In Figur 9 ist schematisch ein erstes und zweites Werkstückteil 41, 44 vor dem Verbinden zu einem bearbeiteten Werkstück 34 gemäß Figur 10 oder Figur 11 dargestellt. Diese Ausführungsform zeigt ein Blechbauteil mit einer daran befestigten Gewindemutter. Zunächst wird ein plattenförmiges Material 13 ausgestanzt, welches nur teilweise dargestellt ist. Zur Herstellung eines Verbindungselementes wird aus einem dickeren plattenförmigen Material 12 eine Hülse als erstes Werkstückteil 41 ausgestanzt oder mit einem Laser ausgeschnitten. Anschließend wird dieses erste Werkstückteil 41 mit einer Handhabungseinrichtung zum plattenförmigen Material 13 positioniert, welche beispielsweise ein vorgestanztes Loch umfasst. Darauffolgend wird das erste Werkstückteil 41 mit dem zweiten Werkstückteil 44 beispielsweise durch Schweißen verbunden. Darauffolgend kann das zweite Werkstückteil 44 durch einen Laserstrahl fertiggeschnitten oder ausgestanzt werden.

In Figur 11 ist eine alternative Ausführungsform des bearbeiteten Werkstücks 34 zu Figur 10 dargestellt. Dabei kann eine Pressverbindung zwischen dem ersten Werkstückteil 41 und dem zweiten Werkstückteil 44 vorgesehen sein. Alternativ kann auch nur eine Vertiefung im Lochbereich des zweiten plattenförmigen Materials 13 eingebracht werden, um eine definierte Aufnahme für das erste Werkstückteil 41 zu ermöglichen. Durch eine Klebe-, Schweiß- oder Lötverbindung kann das erste Werkstückteil 41 mit dem zweiten Werkstückteil 44 wiederum verbunden sein.

Bei beiden Beispielen des verstärkten Werkstücks 34 gemäß Figur 10 und Figur 11 kann beispielsweise ein Gewinde vor oder nach dem Verbinden der beiden Werkstückteile 41, 44 in das erste Werkstückteil 41 eingebracht sein. Alternativ kann des Weiteren nach dem Zusammenführen von dem ersten und zweiten Werkstückteil 41, 44 gemäß den Figuren 9 und 10 oder den Figuren 9 und 11 in die zumindest eine Bohrung der Werkstückteile 41, 44 ein Einpressteil eingebracht werden, welches beispielsweise aus einem weiteren Material besteht. Ein solches Einpressteil kann beispielsweise mit einem dritten plattenförmigen Material in dem Arbeitsbereich hergestellt werden.

In den Figuren 12 und 13 ist eine weitere alternative Ausführungsform zur Herstellung eines verstärkten Werkstücks 34 dargestellt. Hierbei handelt es sich beispielsweise um eine Flachsenkung einer Mehrschichtkonstruktion. In einem ersten Werkstückteil 41 wird beispielsweise ein Ring mit einer Bohrung 65 sowie Positionierhilfen 48 ausgestanzt. Das zweite Werkstückteil 44 umfasst eine zentrale Bohrung 66 sowie ebenfalls Positionierhilfen 48, die als Erhebungen, Warzen oder dergleichen ausgebildet sind. Nach dem Positionieren und Ausrichten des ersten Werkstückteils 41 über die Positionierhilfen 48 zum zweiten Werkstückteil 44 können beispielsweise wenigstens zwei Verbindungspunkte 55 eingebracht werden. Diese können auch unmittelbar in den Positionierhilfen 48 liegen, insbesondere dann, wenn eine Schweißverbindung gewählt wird. Die beiden übereinanderliegenden Werkstückteile 41, 44 bilden eine gestufte Bohrung.

In Figur 14 ist ein Anwendungsbeispiel zur Handhabung von einem ersten oder zweiten Werkstückteil 41, 44 vorgesehen, welches aufgrund der Größe und/oder Ausbildung und/oder Kontur des Werkstücks mit einer Sauggreifvorrichtung nicht gegriffen werden kann und auch nicht von einem Stanz-Handlings-Werkzeug, bei welchen das Werkstückteil 41, 44 durch Verklemmen oder Verspannen an einem Stanzstempel gehalten ist. In solchen Fällen kann an dem ersten oder zweiten Werkstückteil 41, 44 eine Haltelasche 68 ausgebildet sein, die eine geeignete Aufnahmefläche für eine Sauggreifvorrichtung darstellt. Diese kann nachträglich nach dem Verbinden des ersten Werkstückteils 41 mit dem zweiten Werkstückteil 44 in Analogie zu der in Figur 7 beschriebenen und nachgelagerten Bearbeitung des Teileverbunds abgetrennt werden.

## Patentansprüche

1. Verfahren zum Herstellen von Werkstücken aus mehreren gleichen oder voneinander abweichenden plattenförmigen Materialien (12, 13), insbesondere zur Herstellung von verstärkten Werkstücken (34),
- bei denen in einem Arbeitsbereich (37) einer Bearbeitungsstation (18) in einer Werkstückbearbeitungsmaschine (11) ein erstes plattenförmiges Material (12) positioniert und mit einer Greifvorrichtung (32) entlang einer Werkstückauflage (38) im Arbeitsbereich (37) verfahrbar gehalten wird,
- bei dem in dem Arbeitsbereich (37) der Bearbeitungsstation (18) zumindest ein zweites plattenförmiges Material (13) positioniert und mit einer weiteren Greifvorrichtung (39) der Bearbeitungsstation (18) entlang der Werkstückauflage (38) in dem Arbeitsraum (37) verfahrbar gehalten wird,
- bei dem aus dem ersten plattenförmigen Material (12) zumindest ein erstes Werkstückteil (41) hergestellt wird,
- bei dem das zumindest eine erste Werkstückteil (41) dem zweiten in dem Arbeitsbereich (37) angeordneten zweiten plattenförmigen Material (13) zugeführt und mit diesem plattenförmigen Material (13) oder mit einem zweiten Werkstückteil (44), welches aus dem zweiten plattenförmigen Material (13) hergestellt wird und zumindest teilweise bearbeitet ist, verbunden wird, und
- bei dem zumindest das zweite Werkstückteil (44), welches mit dem zumindest einen ersten Werkstückteil (41) verbunden ist, in der Bearbeitungsstation (18) fertiggestellt wird, **dadurch gekennzeichnet, dass** in einem letzten Bearbeitungsschritt in dem Arbeitsbereich (37) der Bearbeitungsstation (18) das erste und/oder zweite Werkstückteil (41, 44) von dem zweiten plattenförmigen Material (13) oder einem daraus entstehenden Restgitter (45) freigeschnitten wird.

2. Verfahren nach Anspruch 1, **dadurch gekennzeichnet, dass** das zweite Werkstückteil (44) vor dem Positionieren des zumindest einen ersten Werkstückteil (41) teilweise fertiggestellt oder bis auf zumindest einen Verbindungssteg (52) zum Restgitter (45) des zweiten plattenförmigen Materials (13) fertiggestellt wird.

3. Verfahren nach einem der vorhergehenden Ansprüche, **dadurch gekennzeichnet, dass** das zumindest eine erste Werkstückteil (41) mit einem Werkzeug oder einer Handhabungseinrichtung aus der Ebene der Werkstückauflage (38) herausgehoben und auf das zweite plattenförmige Material (13) überlappend positioniert wird.

4. Verfahren nach einem der vorhergehenden Ansprüche, **dadurch gekennzeichnet, dass** die Handhabung des zumindest einen ersten Werkstückteils (41) zur Positionierung zum zweiten plattenförmigen Material (13) mit einem Stanz-Handling-Werkzeug oder mit zumindest einer Sauggreifvorrichtung durchgeführt wird.

5. Verfahren nach einem der vorhergehenden Ansprüche, **dadurch gekennzeichnet, dass** an dem zumindest einen ersten Werkstückteil (41) eine Haltelasche (68) oder ein Halterahmen für den Transport zum zweiten plattenförmigen Material (13) ausgebildet wird, welche nach dem Verbinden des ersten Werkstückteils (41) mit dem zweiten Werkstückteils (44) abgetrennt wird.

6. Verfahren nach einem der vorhergehenden Ansprüche, **dadurch gekennzeichnet, dass** vor dem Positionieren des ersten Werkstückteils (41) zum zweiten bearbeiteten Werkstückteil (44) in das zumindest eine erste und/oder das zumindest eine zweite Werkstückteil (41, 44) zumindest eine Positionierhilfe (48) eingebracht wird, die vorzugsweise durch eine Loch- und eine Zentrierwarze oder durch eine Ausprägung und eine komplementäre Vertiefung gebildet wird.

7. Verfahren nach einem der vorhergehenden Ansprüche, **dadurch gekennzeichnet, dass** das zumindest eine erste bearbeitete und das zumindest eine zweite Werkstückteil (41, 44) durch Fügen, insbesondere zusatzwerkstofffreies Durchsetzfügen, durch Kleben, durch Löten, durch Schweißen oder durch eine mechanische Arretierung miteinander verbunden werden.

8. Verfahren nach einem der vorhergehenden Ansprüche, **dadurch gekennzeichnet, dass** in dem ersten plattenförmigen Material (12) mehrere erste Werkstückteile (41) eingebracht werden und dass in dem zweiten plattenförmigen Material (13) eine in der Anzahl der ersten Werkstückteile (41) entsprechende Anzahl von zweiten Werkstückteilen (44) hergestellt wird und darauffolgend die ersten und zweiten Werkstückteile (41, 44) durch Verbindungsstege (52) im Restgitter (42, 45) des ersten und zweiten plattenförmigen Materials (12, 13) gehalten werden und das erste plattenförmige Material (12) vollständig oberhalb des zweiten plattenförmigen Materials (13) positioniert wird.

9. Verfahren nach Anspruch 8, **dadurch gekennzeichnet, dass** das erste plattenförmige Material (12) durch Umklappen zum zweiten plattenförmigen Material (13) positioniert oder dass das erste plattenförmige Material (12) durch Herausheben aus der Werkstückauflageebene oberhalb des zweiten plattenförmigen Materials (13) positioniert und abgesenkt wird.

10. Verfahren nach einem der vorhergehenden Ansprüche, **dadurch gekennzeichnet, dass** das erste und zumindest eine weitere zweite plattenförmige Material (12, 13) mit zumindest einem Stanzwerkzeug und/oder Biegewerkzeug und/oder durch Laserschneiden bearbeitet werden.

11. Verfahren nach einem der vorhergehenden Ansprüche, **dadurch gekennzeichnet, dass** verstärkte Werkstücke (34) aus dem ersten Werkstückteil (41) als eine Verbindungskomponente, insbesondere Gewindeeinsatz oder Gewindehülse, und das zweite Werkstückteil (44) aus einem plattenförmigen Material (13) hergestellt wird.

12. Verfahren nach einem der vorhergehenden Ansprüche, **dadurch gekennzeichnet, dass** das verstärkte Werkstück (34) aus mehreren verschiedenen Materialien und/oder Materialstärken als Baugruppe hergestellt wird.

13. Verfahren nach einem der vorhergehenden Ansprüche, **dadurch gekennzeichnet, dass** das verstärkte Werkstück (34) durch einen Mehrschichtaufbau aus mehreren plattenförmigen Materialien (12, 13) gebildet wird.

## Claims

1. Method for the production of work pieces made of several plate-shaped materials (12, 13) which are the same or differ from one another, in particular for the production of reinforced work pieces (34),
- wherein a first plate-shaped material (12) is positioned in a working region (37) of a processing station (18) in a work piece processing machine (11) and is held to be moveable along a work piece support (38) in the working region (37) by means of a gripping device (32),
- wherein at least one second plate-shaped material (13) is positioned in the working region (37) of the processing station (18) and is held to be moveable along the work piece support (38) in the working region (37) by means of an additional gripping device (39) of the processing station (18),
- wherein at least one first work piece part (41) is produced from the first plate-shaped material (12),
- wherein the at least one first work piece part (41) is supplied to the second plate-shaped material (13) which is arranged in the working region (37) and is connected to this plate-shaped material (13) or to a second work piece part (44) which is produced from the second plate-shaped material (13) and is at least partially processed, and
- wherein at least the second work piece part (44), which is connected to the at least one first work piece part (41), is finished in the processing station (18), **characterised in that** the first and/or second work piece part (41, 44) is cut free from the plate-shaped material (13) or a residual grid (45) resulting therefrom in a final processing step in the working region (37) of the processing station (18).

2. Method according to claim 1, **characterised in that** the second work piece part (44) is partially finished before the positioning of the at least one first work piece part (41) or is finished except for at least one connecting bridge (52) to the residual grid (45) of the second plate-shaped material (13).

3. Method according one of the preceding claims, **characterised in that** the at least one first work piece part (41) is lifted out of the plane of the work piece support (38) with a tool or a handling device and is positioned on the second plate-shaped material (13) in an overlapping manner.

4. Method according one of the preceding claims, **characterised in that** the handling of the at least one first work piece part (41) for positioning with respect to the second plate-shaped material (13) is carried out with a punching handling tool or with at least one suction gripping device.

5. Method according to one of the preceding claims, **characterised in that** a holding bracket (68) or a holding frame is formed on the at least one first work piece part (41) for transportation to the second plate-shaped material (13), which is detached after the connection of the first work piece part (41) and the second work piece part (44) .

6. Method according to one of the preceding claims, **characterised in that** at least one positioning aid (48) is introduced into the at least one first and/or the at least one second work piece part (41, 44) before the first work piece part (41) is positioned with respect to the second processed work piece part (44), said positioning aid (48) preferably being formed by a hole and a centring stud or by an embossment and a complementary depression.

7. Method according to one of the preceding claims, **characterised in that** the at least one first processed work piece part and the at least one second work piece part (41, 44) are connected to one another by means of joining, in particular clinching without additional material, by adhesive bonding, by soldering, by welding or by mechanical locking.

8. Method according to one of the preceding claims, **characterised in that** several first work piece parts (41) are introduced into the first plate-shaped material (12), and a number of second work piece parts (44) which corresponds to the number of first work piece parts (41) is produced in the second plate-shaped material (13) and the first and second work piece parts (41, 44) are then held by connecting bridges (52) in the residual grid (42, 45) of the first and second plate-shaped material (12, 13) and the first plate-shaped material (12) is positioned completely above the second plate-shaped material (13).

9. Method according to claim 8, **characterised in that** the first plate-shaped material (12) is positioned by folding over to the second plate-shaped material (13) or the first plate-shaped material (12) is positioned and lowered by lifting out of the work piece support plane above the second plate-shaped material (13).

10. Method according to one of the preceding claims, **characterised in that** the first and at least one further second plate-shaped material (12, 13) are processed with at least one punching tool and/or bending tool and/or by laser cutting.

11. Method according to one of the preceding claims, **characterised in that** reinforced work pieces (34) are produced from the first work piece part (41) as a connecting component, in particular a threaded insert or threaded sleeve, and the second work piece part (44) is produced from a plate-shaped material (13).

12. Method according to one of the preceding claims, **characterised in that** the reinforced work piece (34) is produced as an assembly from several different materials and/or material thicknesses.

13. Method according to one of the preceding claims, **characterised in that** the reinforced work piece (34) is formed by a multi-layer construction made from several plate-shaped materials (12, 13).

## Revendications

1. Procédé destiné à fabriquer des pièces à partir de plusieurs matériaux (12, 13) en forme de plaque, identiques ou différents les uns des autres, en particulier destiné à fabriquer des pièces renforcées (34),
- lors duquel un premier matériau (12) en forme de plaque est positionné dans une zone de travail (37) d'une station d'usinage (18) située dans une machine d'usinage de pièces (11) et est maintenu avec un dispositif de préhension (32) de manière à pouvoir se déplacer, le long d'un porte-pièce (38), dans la zone de travail (37),
- lors duquel au moins un deuxième matériau (13) en forme de plaque est positionné dans la zone de travail (37) de la station d'usinage (18) et est maintenu avec un autre dispositif de préhension (39) de la station d'usinage (18) de manière à pouvoir se déplacer, le long du porte-pièce (38), dans la zone de travail (37),
- lors duquel au moins une première partie de pièce (41) est fabriquée à partir du premier matériau (12) en forme de plaque,
- lors duquel ladite au moins une première partie de pièce (41) est amenée au deuxième matériau (13) en forme de plaque disposé dans la zone de travail (37) et est assemblé audit matériau (13) en forme de plaque ou à une deuxième partie de pièce (44) qui est fabriquée à partir du deuxième matériau (13) en forme de plaque et qui est usinée au moins en partie, et
- lors duquel au moins la deuxième partie de pièce (44) qui est assemblée à ladite au moins une première partie de pièce (41) est terminée dans la station d'usinage (18), **caractérisé en ce que** lors d'une dernière étape d'usinage effectuée dans la zone de travail (37) de la station d'usinage (18), la première partie et/ou la deuxième partie de pièce (41, 44) est/sont libérée(s) par découpe du deuxième matériau (13) en forme de plaque ou d'une grille résiduelle (45) résultant de ladite découpe.

2. Procédé selon la revendication 1, **caractérisé en ce que**, avant le positionnement de ladite au moins une première partie de pièce (41), la deuxième partie de pièce (44) est partiellement terminée ou est terminée à l'exception d'au moins une partie de liaison (52) la rattachant à la grille résiduelle (45) du deuxième matériau (13) en forme de plaque.

3. Procédé selon l'une quelconque des revendications précédentes, **caractérisé en ce que** ladite au moins une première partie de pièce (41) est soulevée du plan du porte-pièce (38) avec un outil ou un dispositif de manipulation et est positionnée sur le deuxième matériau (13) en forme de plaque de manière le chevaucher.

4. Procédé selon l'une quelconque des revendications précédentes, **caractérisé en ce que** la manipulation de ladite au moins une première partie de pièce (41) en vue de la positionner par rapport au deuxième matériau (13) en forme de plaque est réalisée avec un outil de manipulation/découpe ou avec au moins un dispositif de préhension par aspiration.

5. Procédé selon l'une quelconque des revendications précédentes, **caractérisé en ce que** sur ladite au moins une première partie de pièce (41) est formé(e) une patte de retenue (68) ou un cadre de retenue qui sert au transport de ladite pièce jusqu'au deuxième matériau (13) en forme de plaque et qui est coupé(e) après que ladite première partie de pièce (41) a été assemblée à la deuxième partie de pièce (44).

6. Procédé selon l'une quelconque des revendications précédentes, **caractérisé en ce que**, avant le positionnement de la première partie de pièce (41) par rapport à la deuxième partie de pièce (44) usinée, au moins une aide au positionnement (48) qui est formée de préférence par un trou et un téton de centrage ou par une saillie et un creux complémentaire est réalisé dans ladite au moins une première partie de pièce et/ou ladite au moins une deuxième partie de pièce (41, 44).

7. Procédé selon l'une quelconque des revendications précédentes, **caractérisé en ce que** ladite au moins une première partie de pièce usinée et ladite au moins une deuxième partie de pièce (41, 44) sont unies l'une à l'autre par assemblage, en particulier par assemblage-emboutissage sans apport de matière, par collage, par brasage, par soudage ou par arrêt mécanique.

8. Procédé selon l'une quelconque des revendications précédentes, **caractérisé en ce que** plusieurs premières parties de pièce (41) sont réalisées dans le premier matériau (12) en forme de plaque et qu'un nombre de deuxièmes parties de pièce (44) correspondant au nombre des premières parties de pièce (41) est réalisé dans le deuxième matériau (13) en forme de plaque et qu'ensuite les premières et deuxièmes parties de pièce (41, 44) sont maintenues dans la grille résiduelle (42, 45) du premier et du deuxième matériau (12, 13) en forme de plaque par des parties de liaison (52), et **en ce que** le premier matériau (12) en forme de plaque est positionné entièrement au-dessus du deuxième matériau (13) en forme de plaque.

9. Procédé selon la revendication 8, **caractérisé en ce que** le premier matériau (12) en forme de plaque est positionné par rabattement par rapport au deuxième matériau (13) en forme de plaque, ou **en ce que** le premier matériau (12) en forme de plaque est soulevé du plan du porte-pièce, puis est positionné au-dessus du deuxième matériau (13) en forme de plaque et abaissé.

10. Procédé selon l'une quelconque des revendications précédentes, **caractérisé en ce que** le premier et ledit au moins un autre, deuxième matériau (12, 13) en forme de plaque sont usinés avec au moins un outil à découper et/ou au moins un outil de pliage et/ou par découpe laser.

11. Procédé selon l'une quelconque des revendications précédentes, **caractérisé en ce que** des pièces renforcées (34) sont fabriquées à partir de la première partie de pièce (41) en tant que composant d'assemblage, en particulier en tant qu'insert fileté ou manchon fileté, et que la deuxième partie de pièce (44) est fabriquée à partir d'un matériau (13) en forme de plaque.

12. Procédé selon l'une quelconque des revendications précédentes, **caractérisé en ce que** la pièce renforcée (34) est fabriquée en tant qu'assemblage à partir de plusieurs matériaux différents et/ou de plusieurs épaisseurs différentes de matériaux.

13. Procédé selon l'une quelconque des revendications précédentes, **caractérisé en ce que** la pièce renforcée (34) est formée par une structure multicouche constituée de plusieurs matériaux (12, 13) en forme de plaque.
